# EUROPEAN PATENT SPECIFICATION

(11) **EP 3 796 466 B1**
(45) Date of publication and mention of the grant of the patent: **28.02.2024**
(21) Application number: 19198157.0
(22) Date of filing: 18.09.2019
(51) Int. Cl.: H01P 5/107, H01P 1/18

(54) **RADIO FREQUENCY DEVICE**
HOCHFREQUENZVORRICHTUNG
DISPOSITIF DE FRÉQUENCE RADIO

(43) Date of publication of application: 24.03.2021
(73) Proprietor: ALCAN Systems GmbH, 64293 Darmstadt (DE)
(72) Inventor: Dr. Gäbler, Alexander, 64287 Darmstadt (DE)
(74) Representative: Habermann Intellectual Property Partnerschaft von Patentanwälten mbB

(56) References cited:
- GB-A- 1 059 547
- JP-A- S6 216 603
- US-A1- 2017 222 323
- ABOU-KHOUSA M A ET AL: "Novel Near-Field Millimeter-Wave Differential Probe Using a Loaded Modulated Aperture", IEEE TRANSACTIONS ON INSTRUMENTATION AND MEASUREMENT, IEEE SERVICE CENTER, PISCATAWAY, NJ, US, vol. 58, no. 5, 1 May 2009 (2009-05-01), pages 1273-1282, XP011249708, ISSN: 0018-9456
- ORTNER M ET AL: "A millimeter-wave wide-band transition from a differential microstrip to a rectangular waveguide for 60 GHz applications", ANTENNAS AND PROPAGATION, 2006. EUCAP 2006. FIRST EUROPEAN CONFERENCE ON, 1 April 2011 (2011-04-01), pages 1946-1949, XP055948099, Piscataway, NJ, USA ISSN: 2164-3342 ISBN: 978-92-9092-937-6 Retrieved from the Internet: URL:https://ieeexplore.ieee.org/stampPDF/g etPDF.jsp?tp=&arnumber=5781943&ref=aHR0cHM 6Ly9pZWVleHBsb3JlLmllZWUub3JnL2RvY3VtZW50L zQ5NTc5NDEvY2l0YXRpb25zP3RhYkZpbHRlcj1wYXB lcnM=>

## Description

### Technical Field

The invention relates to a radio frequency device with a transition unit providing a transition between a planar differential pair transmission line and a hollow radio frequency waveguide, the radio frequency device comprising a substrate layer arrangement with a planar differential pair transmission line arranged on one or more surfaces of at least one substrate layer of the substrate layer arrangement, and with the transition unit comprising an end section of the differential pair transmission line that is configured as a radio frequency signal emission pattern, the transition unit further comprising an end section of the waveguide for radio frequency electromagnetic waves that is attached to substrate layer arrangement and that superposes the radio frequency signal emission pattern, whereby the end section of the waveguide is directed perpendicular to the first surface of the first substrate layer, whereby an open end of the end section of the waveguide is attached to a top surface or a back surface of the substrate layer arrangement and superposes the radio frequency signal emission pattern, whereby opposite to the end section of the waveguide a back cavity is attached with an open end of the back cavity to the substrate layer arrangement, and whereby the back cavity prevents a part of the radio frequency signal emission that is emitted from the emission pattern from leaking outside of the end section of the waveguide.

### Background of the invention

Several applications for electromagnetic waves and corresponding signals require low loss transmission or low loss distribution of radio frequency signals, or both. Hollow waveguides as e.g. a rectangular waveguide feature this behavior and are commonly used in this regard. However, further signal processing usually requires a transition to a planar substrate where, depending on the purpose, several kinds of planar transmission lines are commonly used. The coupling of radio frequency waves between hollow waveguides and planar transmission lines depends on the kind of planar transmission line that is used for signal transmission along a planar substrate layer. Different kinds of planar transmission lines include e.g. a microstrip transmission line or a differential pair transmission line. Nevertheless, the majority of published work focuses to the radio frequency signal transition from a hollow waveguide into the microstrip mode.

A planar differential pair transmission line can be arranged on two opposing surfaces of a single substrate layer. In this case the substrate layer arrangement comprises at least the single substrate layer, but may also comprise additional substrate layers dedicated to other means or functions. It is also possible to arrange different sections of a planar differential pair transmission line at surfaces of two or even more different substrate layers of a substrate layer arrangement that comprises these two or more different substrate layers. In recent developments a planar differential pair transmission line is arranged on two surfaces of two substrate layers made of e.g. glass, whereby the two substrate layers are arranged at a distance towards each other. Sections of the planar differential pair transmission line are arranged at the two surfaces of the two substrate layers that face each other. In case that a material with variable and controllable dielectric characteristics is arranged inside between the two substrate layers, the signal transmission characteristics of the planar differential pair transmission line can be modified.

Several possibilities of transitions into the differential strip line mode are also known from e.g. US 2017/0222323 A1 or JP S62 16603 A or Mohamed A. Abou-Khousa et al.: "Novel Near-Field Millimeter-Wave Differential Probe using a Loaded Modulated Aperture", IEEE Transactions on Instrumentation and Measurement, vol. 58, no. 5, 1 May 2009, but they are affected by detrimental characteristics and constraints. Usually, such transitions suffer from bandwidth limitations. In many cases the already known transitions require vias within the substrate layer arrangement which are not only costly but also not easily applicable to all used substrate technologies e.g. multilayer glass. They are also comparable bulky which limits the application to either one single transition or multiple transitions which are geometrically well separated. Furthermore, such transitions usually require the insertion of at least one substrate layer of the substrate layer arrangement into the waveguide itself which limits the placement of the transition to edge or corner points of the substrate.

The document Ortner M. et al: "A millimeter-wave wide-band transition from a differential microstrip to a rectangular waveguide for 60 GHz applications", EUCAP 2006. FIRST EUROPEAN CONFERENCE ON ANTENNAS AND PROPAGATION, 1 April 2011 (2011-04-01), pages 1946-1949, XP055948099, Piscataway, NJ, USA ISSN: 2164-3342 ISBN: 978-92-9092-937-6 discloses a transition between a planar differential pair transmission line and a hollow radio frequency waveguide, whereby opposite to the end section of the waveguide a back cavity is attached with an open end of the back cavity to the substrate layer arrangement.

However, for many applications more tightly spaced transition points are required without the limitation to substrate edges and without the need of radiation suppressing vias over a larger bandwidth.

Thus, there is a need to provide for a transition unit that allows for a highly efficient transition of the radio frequency signal, and that is easily manufactured and does not require much space.

### Summary of the invention

The present invention relates to a radio frequency device with a transition unit as described above and with features according to claims 1 or 6. Thus, several transition units are arranged in two or more rows running parallel and at a distance towards each other. By arranging several transition units in two or more rows the total surface area that is required for mounting this number of transition units onto the surface of the substrate layer can be reduced in comparison to a single row of transition units. Thus, two or more rows of transition units allow for a compact and space-saving arrangement of a large number of transition units, and also allow for very favorable electric boundary conditions that result from arranging similar transition units along a straight line and adjacent to each of the neighboring transition units.

By mounting the open end of the end section of the waveguide on a surface of a substrate layer of the substrate layer arrangement, the transition unit can be arranged at an arbitrary position within the surface of the substrate layer arrangement. There is no need to arrange the transition unit at a border or edge of the respective substrate layer. Thus, the invention allows for more options and less space restrictions related to the design of the radio frequency device. A back cavity can be easily and cost-effectively manufactured. Many radio frequency devices require complex hollow waveguide structures that can be arranged on one or both sides of the substrate layer, which facilitates the design and manufacture of additional back cavities. By adding a back cavity at the appropriate spot on the opposing surface of the substrate layer arrangement, the efficiency of the transition between the hollow waveguide and the planar differential pair transmission line can be significantly enhanced, i.e. unwanted radio frequency signal emission leaking outside of the end section of the waveguide can be reduced. Such a transition unit is considered advantageous over prior art especially with respect to radio frequency signal transitions from the planar differential pair transmission line into the adjacent hollow waveguide.

According to an advantageous embodiment of the invention, a distance between the planar differential pair transmission line and a back side of the back cavity that opposes the substrate layer is larger than at least one distance between opposing parts of the circumferential line of a cross-section of the open end of back cavity. For many applications it is considered advantageous to provide for a large distance between a back side of the back cavity and the planar differential pair transmission line, which helps to reduce the leakage of radio frequency signal emission from the transition unit. During design of the radio frequency device, there will usually be a trade-off between space requirements for the back cavity and enhancement of the signal transition efficiency.

The invention also relates to a radio frequency device with a transition unit as described in the beginning, whereby the end section of the waveguide is a first end section of a first waveguide, and whereby opposite to the end section of the waveguide a second end section of a second waveguide that is directed into an opposite direction of the first end section of the first waveguide is attached to the substrate layer arrangement, whereby a part of the radio frequency signal emission that is emitted from the emission pattern of the is transmitted into the second end section of the second waveguide. Thus, the second end section of the second waveguide is not only used as a means for suppressing unwanted leakage of the radio frequency signal at this special region of the radio frequency device, but allows for an additional benefit of creating a branching of the signal transmission without need for additional branching components. The first and second waveguide can be used to transmit the radio frequency signal towards different components of the radio frequency device. It is also possible to reunite the first and second waveguide and to superimpose the two branches of the radio frequency signal into a single combined radio frequency signal.

According to a further aspect of the invention, a cross-section area of the open end of the back cavity or of the second end section of the second waveguide and a cross-section area of the open end of the end section of the waveguide are identical and the open end of the back cavity or the second end section of the second waveguide superpose the open end of the end section of the waveguide. By matching the design and position of the end section of the waveguide and the back cavity or the second end section of the second waveguide, the electrical boundary conditions for the transition of the radio frequency signal can be modified and optimized in order to reduce unwanted leakage of the radio frequency signal emission from the transition unit, which will also enhance the transmission efficiency.

For many applications it is advantageous or even mandatory to arrange several transition units onto a single substrate layer arrangement. Thus, the radio frequency device comprises several transition units arranged adjacent to each other. The arrangement of hollow waveguides with similar signal power during use of the radio frequency device adjacent to each other imposes additional electrical boundary conditions for the radio frequency signal emission that contribute to the reduction of unwanted signal leakage from each of the transition units. In the same manner the arrangement of back cavities or of the second end sections of the second waveguides adjacent to each other and opposite to the respective open ends of the corresponding end sections of the hollow waveguides also imposes additional electrical boundary conditions that reduce unwanted leakage and thus improve the efficiency for the transition of the radio frequency signal between the planar transmission line and the hollow waveguide. The arrangement of several transition units adjacent to each other as well as the design and position of each transition unit can be easily modified and adapted to the respective needs related to the radio frequency device in question as well as to the intended transition efficiency for the radio frequency signals that are transmitted within the radio frequency device.

For many applications the diameter of a hollow waveguide will be less than a preferred distance between adjacent hollow waveguides that depends on the wavelength of the radio frequency signal and results in favorable electrical boundary conditions for reducing unwanted leakage. Thus, a preferred arrangement of adjacent transition units might require some distance between adjacent hollow waveguides and the respective transition units.

In yet another embodiment of the invention the distance between adjacent transition units of at least one row is larger or identical to the lateral extension of the transition units, and whereby at least some of the transition units of a neighboring row are arranged within a corresponding gap between adjacent transition units of the at least one row. The distance between a first transition unit and a second transition unit within the at least one row can be used for arranging planar transition lines connected to the transition units of neighboring row. The hollow waveguides of the transition units of the neighboring row can also be arranged in a manner as to improve the electrical boundary conditions for the transition units of the at least one row, and vice versa.

According to a favorable aspect of the invention the design of two or more back cavities or of two or more of the second end sections of the second waveguides that are arranged adjacent to each other is identical. Furthermore, it is also considered advantageous that the design of two or more end sections of the waveguides that are arranged adjacent to each other is also identical. By matching the design and position of the end sections of the waveguides or of the corresponding back cavities or the corresponding second end sections of the second waveguides, or of both, the electrical boundary conditions for the transition of the radio frequency signal that is transmitted through each of the transition units are advantageous and support a very efficient transition of the radio frequency signal by reducing most of the unwanted leakage of the radio frequency signal emission from the respective transition unit. The favorable electrical boundary conditions can be preset by arranging a number of identical transition units adjacent to each other along a straight line or curved row.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the scope of the invention defined by the appended claims. Like parts depicted in the drawings are referred to by the same reference numerals.

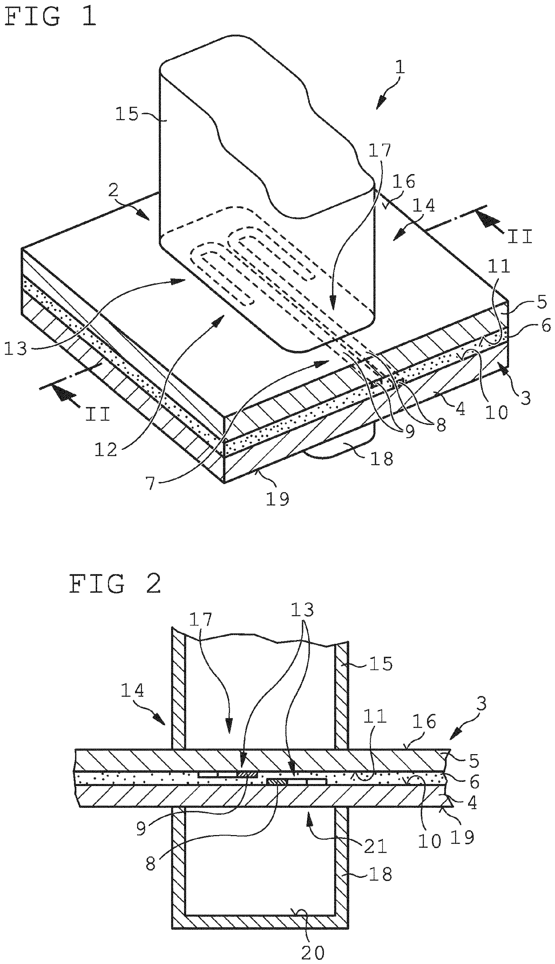

Figure 1 illustrates a perspective sectional view of a transition unit of a radio frequency device with an arrangement of two substrate layers with a planar differential pair transmission line arranged between facing surfaces of the substrate layers, with an end section of a hollow waveguide positioned at a top surface of a substrate layer arrangement comprising the two substrate layers,
   whereby an end section of the hollow waveguide superposes the radio frequency signal emission pattern of the planar differential pair transmission line, and with a back cavity opposingly attached to a back surface of the substrate layer arrangement,
Figure 2 illustrates a sectional view along the line II-II of the transition unit shown in figure 1,

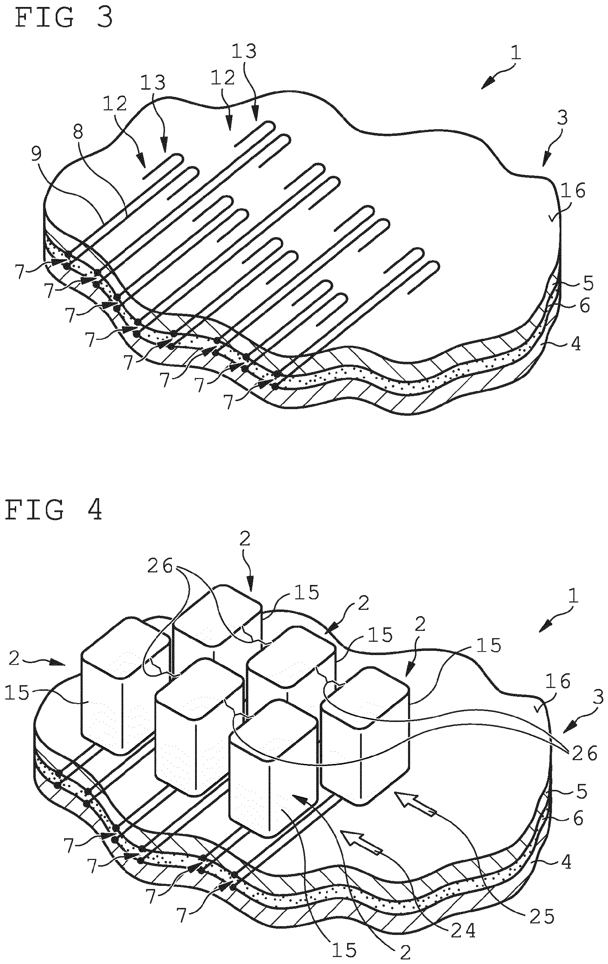

Figure 3 illustrates a perspective view of several planar differential pair transmission lines arranged within a substrate layer arrangement adjacent to each other, whereby each end section of the respective differential pair transmission line is configured as a radio frequency signal emission pattern,
Figure 4 illustrates a perspective view of the substrate layer arrangement of figure 3 with end sections of the respective hollow waveguides mounted on top of the radio frequency signal emission patterns and back cavities arranged opposite to the hollow waveguides at the substrate layer arrangement, and

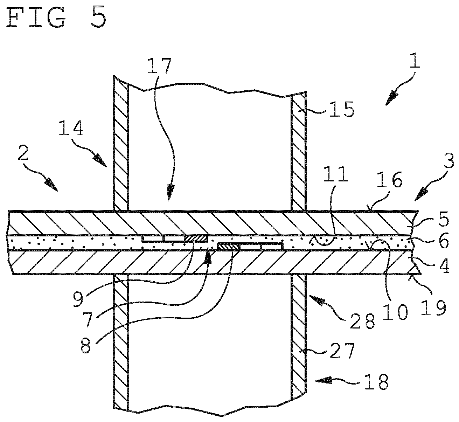

Figure 5 illustrates another embodiment of a transition unit with a first hollow waveguide and a second hollow waveguide arranged on the substrate layer arrangement opposing towards each other.

In figures 1 and 2 a perspective sectional view of an exemplary part of a radio frequency device 1 with a transition unit 2 according to the present invention is shown. The radio frequency device 1 comprises a substrate layer arrangement 3 that comprises a first substrate layer 4 and a second substrate layer 5, each made of an electrically non-conducting material like e.g. glass. The first and second substrate layer 4, 5 are arranged parallel and at a distance towards each other. The volume between the first and second substrate layer 4, 5 is filled with a tunable dielectric material 6 like e.g. a liquid crystal material with variable and controllable dielectric properties. The volume between the first and second substrate layer 4, 5 can be segmented to allow for many small segments or chambers that are filled with the tunable dielectric material 6. The dielectric properties of the tunable dielectric material 6 can be controlled e.g. by applying a bias voltage to bias electrodes on opposite sides of the volume or of a small segment for which the dielectric properties of the tunable dielectric material are to be preset or modified.

A planar differential pair transmission line 7 with two parallel line sections 8, 9 of an electrically conducting material is arranged on a first surface 10 of the first substrate layer 4 and on a second surface 11 of the second surface 5 of the substrate layer arrangement 3. The first surface 10 and the second surface 11 are facing each other and confine the volume between the first and second substrate layer 4, 5. The planar differential pair transmission line 7 runs into an end section 12 that is configured as a radio frequency signal emission pattern 13, resulting in a dipole-like configuration within this embodiment.

An end section 14 of a hollow waveguide 15 made from an electroconductive material is also arranged on a first outer surface 16 of the substrate layer arrangement 3. An open end 17 of the end section 14 of the hollow waveguide 15 superposes the radio frequency signal emission pattern 13 of the end section 12 of the planar differential pair transmission line 7, as can be seen in figure 2. Thus, a radio frequency signal that is transmitted along the planar differential pair transmission line 7 towards the end section 12 will be emitted from the frequency signal emission pattern 13. A part of the emitted signal power will be directed through the open end 17 and into the hollow waveguide 16. Another part of the emitted signal power will be directed into an opposite direction.

Opposite to the end section 14 of the hollow waveguide 15 there is a back cavity 18 that is mounted onto a second outer surface 19 of the substrate layer arrangement 3, whereby the second outer surface 19 is opposite to the first outer surface 16 of the substrate layer arrangement 3. A distance between the second outer surface 19 of the substrate layer arrangement 3 and a back side 20 of the back cavity 18 that opposes the second outer surface 19 is larger than the distance between opposing parts of the circumferential line of a cross-section of an open end 21 of the back cavity 18, i.e. larger than a distance between opposing wall sections 22, 23 around the open end 21 of the back cavity 18.

A shape of the open end 21 of the back cavity 18 equals the shape of the open end 17 of the hollow waveguide 15. Furthermore, the open end 21 of the back cavity 18 is positioned opposing to the end section 14 of the hollow waveguide 15 in a manner as to fully superimpose the open end 17 of the hollow waveguide 15. A large part of the signal power that is directed into the direction of the back cavity 18 will be reflected and fed into the hollow waveguide 15. By adding the back cavity 18 to the transition unit 2, an unwanted leakage of radio frequency signal emission from the transition unit 2 can be significantly reduced.

Figures 3 and 4 show a part of a radio frequency device 1 with several transition units 2 arranged in two rows 24, 25 along the first surface 10 of the first substrate layer 4 and along the second surface 11 of the second surface 5 of the substrate layer arrangement 3. In figure 3 the transition units 2 are shown without hollow waveguides 15 and without back cavities 18. In figure 4 the same transition units 2 are shown with hollow waveguides 15 and back cavities 18, whereby the end sections 14 of the hollow waveguides 15 and the respective open ends 21 of the back cavities 18 each superpose the frequency signal emission patterns 13 of the corresponding planar differential pair transmission lines 7.

A distance between adjacent transition units 2 of the first row 24 and of a second row 25 is larger than the lateral extension of each of the hollow waveguides 15 of the adjacent transition units 2. Thus, there is a gap 26 between adjacent hollow waveguides 15 along the first row 24 as well as along the second row 25. The transition units 2 of the first row 24 are arranged within a corresponding gap 26 between adjacent transition units 2 of the second row 25, and vice versa. The planar differential pair transmission lines 7 that run towards the transition units 2 of the second row 25 are arranged within the gap 26 between adjacent transition units 2 of the first row 24.

Figure 5 illustrates another embodiment of the transition unit 2 of a radio frequency device 1. A second hollow waveguide 27 is used instead of the back cavity 18. Most part of the radio frequency signal emission from the frequency signal emission pattern 13 will be directed either into the first hollow waveguide 15 that is arranged on the first outer surface 16 of the substrate layer arrangement 3 or into the second hollow waveguide 27 that is arranged on the second outer surface 19 of the substrate layer arrangement 3 opposing the first hollow waveguide 15. The undesired leakage of radio frequency signal emission from the transition unit 2 will be significantly reduced. A signal transmission direction within the end section 14 of the first hollow waveguide 15 is opposite to a signal transmission direction within an end section 28 of the second waveguide 27.

## Claims

1. A radio frequency device (1) with a transition unit (2) providing a transition from a planar differential pair transmission line (7) to a hollow radio frequency waveguide (15, 27), the radio frequency device (1) comprising a substrate layer arrangement (3) with a planar differential pair transmission line (7) arranged on one or more surfaces (10, 11) of at least one substrate layer (4, 5) of the substrate layer arrangement (3), and with the transition unit (2) comprising an end section (12) of the differential pair transmission line (7) that is configured as a radio frequency signal emission pattern (13), the transition unit (2) further comprising an end section (14) of the waveguide (15) for radio frequency electromagnetic waves that is attached to the substrate layer arrangement (3) and that superposes the radio frequency signal emission pattern (13), whereby the end section (14) of the waveguide (15) is directed perpendicularly to the one or more surfaces (10, 11) of the substrate layer arrangement (3) with the planar differential pair transmission line (7), whereby an open end (17) of the end section (14) of the waveguide (15) is attached to a first outer surface (16) or a second outer surface (19) of the substrate layer arrangement (3), whereby opposite to the end section (14) of the waveguide (15) a back cavity (18) is attached with an open end (21) of the back cavity (18) to the substrate layer arrangement (3), whereby the back cavity (183) is configured to prevent j a part of the radio frequency signal emission that is emittable from the emission pattern (13) from leaking outside of the end section (14) of the waveguide (15), **characterized in that** the radio frequency device (1) comprises several transition units (2) arranged adjacent to each other along the first outer surface (16) and the second outer surface (19) of the substrate layer arrangement (3), and **in that** the several transition units (2) are arranged in two or more rows (24, 25) running parallel and at a distance towards each other.

2. Radio frequency device (1) according to claim 1, whereby a distance between the planar differential pair transmission line (7) and a back side (20) of the back cavity (18) that opposes the first or second surface (10, 11) of the substrate layer arrangement (3) is larger than at least one distance between opposing parts (22, 23) of the circumferential line of a cross-section of the open end (21) of the back cavity (18).

3. Radio frequency device (1) according to one of the preceding claims, **characterized in that** a cross-section area of the open end (21) of the back cavity (18) and a cross-section area of the open end (17) of the end section (14) of the waveguide (15) are identical and that the open end (21) of the back cavity (18) superposes the open end (17) of the end section (14) of the waveguide (15).

4. Radio frequency device (1) according to one of the preceding claims, whereby a distance (26) between adjacent transition units (2) of a first row (24) or of a second row (25) is larger or identical to the lateral extension of the transition units (2), and whereby at least some of the transition units (2) of the first row (24) are arranged within a corresponding gap (26) between adjacent transition units (2) of the second row (25).

5. Radio frequency device (1) according to one of the preceding claims , **characterized in that** the design of two or more back cavities (18) that are arranged adjacent to each other is identical.

6. A radio frequency device (1) with a transition unit (2) providing a transition from a planar differential pair transmission line (7) to a hollow radio frequency waveguide (15, 27), the radio frequency device (1) comprising a substrate layer arrangement (3) with a planar differential pair transmission line (7) arranged on one or more surfaces (10, 11) of at least one substrate layer (4, 5) of the substrate layer arrangement (3), and with the transition unit (2) comprising an end section (12) of the differential pair transmission line (7) that is configured as a radio frequency signal emission pattern (13), the transition unit (2) further comprising an end section (14) of the waveguide (15) for radio frequency electromagnetic waves that is attached to the substrate layer arrangement (3) and that superposes the radio frequency signal emission pattern (13), whereby the end section (14) of the waveguide (15) is directed perpendicularly to the one or more surfaces (10, 11) of the substrate layer arrangement (3) with the planar differential pair transmission line (7), whereby an open end (17) of the end section (14) of the waveguide (15) is attached to a first outer surface (16) or a second outer surface (19) of the substrate layer arrangement (3), whereby the end section (14) of the waveguide (15) is a first end section (14) of a first waveguide (15), and in that opposite to the end section (14) of the waveguide (15) a second end section (28) of a second waveguide (27) that is directed into an opposite direction of the first end section (14) of the first waveguide (15) is attached to the substrate layer arrangement (3), and whereby a part of the radio frequency signal emission that is emittable from the emission pattern (13) is transmitted into the second end section (28) of the second waveguide (27), **characterized in that** the radio frequency device (1) comprises several transition units (2) arranged adjacent to each other along the first outer surface (16) and the second outer surface (19) of the substrate layer arrangement (3), and **in that** the several transition units (2) are arranged in two or more rows (24, 25) running parallel and at a distance towards each other.

7. Radio frequency device (1) according to claim 6, **characterized in that** a cross-section area of the second end section (28) of the second waveguide (27) and a cross-section area of the open end (17) of the end section (14) of the waveguide (15) are identical and that the second end section (28) of the second waveguide (27) superposes the open end (17) of the end section (14) of the waveguide (15).

8. Radio frequency device (1) according to claim 6 or claim 7, whereby a distance (26) between adjacent transition units (2) of a first row (24) or of a second row (25) is larger or identical to the lateral extension of the transition units (2), and whereby at least some of the transition units (2) of the first row (24) are arranged within a corresponding gap (26) between adjacent transition units (2) of the second row (25) .

9. Radio frequency device (1) according to one of the preceding claims 6 to 8, **characterized in that** the design of two or more second end sections (28) of the second waveguides (27) that are arranged adjacent to each other is identical.

## Patentansprüche

1. Hochfrequenzvorrichtung (1) mit einer Übergangseinheit (2), die einen Übergang von einer planaren Differentialpaarübertragungsleitung (7) zu einem hohlen Hochfrequenzwellenleiter (15, 27) bereitstellt, wobei die Hochfrequenzvorrichtung (1) eine Substratschichtanordnung (3) mit einer planaren Differentialpaarübertragungsleitung (7), die auf einer oder mehreren Flächen (10, 11) von zumindest einer Substratschicht (4, 5) der Substratschichtanordnung (3) angeordnet ist, aufweist, und wobei die Übergangseinheit (2) einen Endabschnitt (12) der Differentialpaarübertragungsleitung (7) aufweist, der als eine Hochfrequenzsignalemissionsstruktur (13) konfiguriert ist, wobei die Übergangseinheit (2) ferner einen Endabschnitt (14) des Wellenleiters (15) für elektromagnetische Hochfrequenzwellen aufweist, der an der Substratschichtanordnung (3) angebracht ist und der die Hochfrequenzsignalemissionsstruktur (13) überlagert, wobei der Endabschnitt (14) des Wellenleiters (15) senkrecht zu der einen oder den mehreren Flächen (10, 11) der Substratschichtanordnung (3) mit der planaren Differentialpaarübertragungsleitung (7) gerichtet ist, wobei ein offenes Ende (17) des Endabschnitts (14) des Wellenleiters (15) an einer ersten äußeren Fläche (16) oder einer zweiten äußeren Fläche (19) der Substratschichtanordnung (3) angebracht ist, wobei gegenüber dem Endabschnitt (14) des Wellenleiters (15) ein hinterer Hohlraum (18) mit einem offenen Ende (21) des hinteren Hohlraums (18) zu der Substratschichtanordnung (3) angebracht ist, wobei der hintere Hohlraum (18) konfiguriert ist, zu verhindern, dass ein Teil der Hochfrequenzsignalemission, der von der Emissionsstruktur (13) aussendbar ist, außerhalb des Endabschnitts (14) des Wellenleiters (15) austritt, **dadurch gekennzeichnet, dass** die Hochfrequenzvorrichtung (1) mehrere Übergangseinheiten (2) aufweist, die benachbart zueinander entlang der ersten äußeren Fläche (16) und der zweiten äußeren Fläche (19) der Substratschichtanordnung (3) angeordnet sind, und dass die mehreren Übergangseinheiten (2) in zwei oder mehr Reihen (24, 25) angeordnet sind, die parallel und beabstandet zueinander verlaufen.

2. Hochfrequenzvorrichtung (1) nach Anspruch 1, wobei ein Abstand zwischen der planaren Differentialpaarübertragungsleitung (7) und einer Rückseite (20) des hinteren Hohlraums (18), die der ersten oder der zweiten Fläche (10, 11) der Substratschichtanordnung (3) gegenüberliegt, größer als zumindest ein Abstand zwischen gegenüberliegenden Teilen (22, 23) der Umfangslinie eines Querschnitts des offenen Endes (21) des hinteren Hohlraums (18) ist.

3. Hochfrequenzvorrichtung (1) nach einem der vorherigen Ansprüche, **dadurch gekennzeichnet, dass** eine Querschnittsfläche des offenen Endes (21) des hinteren Hohlraums (18) und eine Querschnittsfläche des offenen Endes (17) des Endabschnitts (14) des Wellenleiters (15) identisch sind und dass das offene Ende (21) des hinteren Hohlraums (18) das offene Ende (17) des Endabschnitts (14) des Wellenleiters (15) überlagert.

4. Hochfrequenzvorrichtung (1) nach einem der vorherigen Ansprüche, wobei ein Abstand (26) zwischen benachbarten Übergangseinheiten (2) einer ersten Reihe (24) oder einer zweiten Reihe (25) größer als oder identisch wie die seitliche Erstreckung der Übergangseinheiten (2) ist, und wobei zumindest einige der Übergangseinheiten (2) der ersten Reihe (24) innerhalb eines entsprechenden Spalts (26) zwischen benachbarten Übergangseinheiten (2) der zweiten Reihe (25) angeordnet sind.

5. Hochfrequenzvorrichtung (1) nach einem der vorherigen Ansprüche, **dadurch gekennzeichnet, dass** die Gestaltung von zwei oder mehr hinteren Hohlräumen (18), die benachbart zueinander angeordnet sind, identisch ist.

6. Hochfrequenzvorrichtung (1) mit einer Übergangseinheit (2), die einen Übergang von einer planaren Differentialpaarübertragungsleitung (7) zu einem hohlen Hochfrequenzwellenleiter (15, 27) bereitstellt, wobei die Hochfrequenzvorrichtung (1) eine Substratschichtanordnung (3) mit einer planaren Differentialpaarübertragungsleitung (7) aufweist, die auf einer oder mehreren Flächen (10, 11) von zumindest einer Substratschicht (4, 5) der Substratschichtanordnung (3) angeordnet ist, und wobei die Übergangseinheit (2) einen Endabschnitt (12) der Differentialpaarübertragungsleitung (7) aufweist, der als Hochfrequenzsignalemissionsstruktur (13) konfiguriert ist, wobei die Übergangseinheit (2) ferner einen Endabschnitt (14) des Wellenleiters (15) für elektromagnetische Hochfrequenzwellen aufweist, der an der Substratschichtanordnung (3) angebracht ist und der die Hochfrequenzsignalemissionsstruktur (13) überlagert, wobei der Endabschnitt (14) des Wellenleiters (15) senkrecht zu der einen oder den mehreren Flächen (10, 11) der Substratschichtanordnung (3) mit der planaren Differentialpaarübertragungsleitung (7) gerichtet ist, wobei ein offenes Ende (17) des Endabschnitts (14) des Wellenleiters (15) an einer ersten äußeren Fläche (16) oder einer zweiten äußeren Fläche (19) der Substratschichtanordnung (3) angebracht ist, wobei der Endabschnitt (14) des Wellenleiters (15) ein erster Endabschnitt (14) eines ersten Wellenleiters (15) ist, und gegenüber dem Endabschnitt (14) des Wellenleiters (15) ein zweiter Endabschnitt (28) eines zweiten Wellenleiters (27), der in eine Gegenrichtung des ersten Endabschnitts (14) des ersten Wellenleiters (15) gerichtet ist, an der Substratschichtanordnung (3) angebracht ist, und wobei ein Teil der Hochfrequenzsignalemission, der von der Emissionsstruktur (13) aussendbar ist, in den zweiten Endabschnitt (28) des zweiten Wellenleiters (27) übertragen wird, **dadurch gekennzeichnet, dass** die Hochfrequenzvorrichtung (1) mehrere Übergangseinheiten (2) aufweist, die entlang der ersten äußeren Fläche (16) und der zweiten äußeren Fläche (19) der Substratschichtanordnung (3) benachbart zueinander angeordnet sind, und dass die mehreren Übergangseinheiten (2) in zwei oder mehr Reihen (24, 25) angeordnet sind, die parallel und in einem Abstand zueinander verlaufen.

7. Hochfrequenzvorrichtung (1) nach Anspruch 6, **dadurch gekennzeichnet, dass** eine Querschnittsfläche des zweiten Endabschnitts (28) des zweiten Wellenleiters (27) und eine Querschnittsfläche des offenen Endes (17) des Endabschnitts (14) des Wellenleiters (15) identisch sind und dass der zweite Endabschnitt (28) des zweiten Wellenleiters (27) das offene Ende (17) des Endabschnitts (14) des Wellenleiters (15) überlagert.

8. Hochfrequenzvorrichtung (1) nach Anspruch 6 oder Anspruch 7, wobei ein Abstand (26) zwischen benachbarten Übergangseinheiten (2) einer ersten Reihe (24) oder einer zweiten Reihe (25) größer als oder identisch wie die seitliche Erstreckung der Übergangseinheiten (2) ist, und wobei zumindest einige der Übergangseinheiten (2) der ersten Reihe (24) innerhalb eines entsprechenden Spalts (26) zwischen benachbarten Übergangseinheiten (2) der zweiten Reihe (25) angeordnet sind.

9. Hochfrequenzvorrichtung (1) nach einem der vorherigen Ansprüche 6 bis 8, **dadurch gekennzeichnet, dass** die Gestaltung von zwei oder mehr zweiten Endabschnitten (28) der zweiten Wellenleiter (27), die benachbart zueinander angeordnet sind, identisch ist.

## Revendications

1. Dispositif de fréquence radio (1) avec une unité de transition (2) fournissant une transition depuis une ligne de transmission à paire différentielle plane (7) à un guide d'ondes de fréquence radio creux (15, 27), le dispositif de fréquence radio (1) comprenant un ensemble de couches de substrat (3) avec une ligne de transmission à paire différentielle planaire (7) disposée sur une ou plusieurs surfaces (10, 11) d'au moins une couche de substrat (4, 5) de l'ensemble de couches de substrat (3), et avec l'unité de transition (2) comprenant une section d'extrémité (12) de la ligne de transmission à paire différentielle (7) qui est configurée en tant qu'un motif d'émission de signal de fréquence radio (13), l'unité de transition (2) comprenant en outre une section d'extrémité (14) du guide d'ondes (15) pour des ondes électromagnétiques de fréquence radio qui est fixée à l'ensemble de couches de substrat (3) et qui superpose le motif d'émission de signal de fréquence radio (13), dans lequel la section d'extrémité (14) du guide d'ondes (15) est dirigée de manière perpendiculaire à les une ou plusieurs surfaces (10, 11) de l'ensemble de couches de substrat (3) avec la ligne de transmission à paire différentielle planaire (7), dans lequel une extrémité ouverte (17) de la section d'extrémité (14) du guide d'ondes (15) est fixée à une première surface extérieure (16) ou à une deuxième surface extérieure (19) de l'ensemble de couches de substrat (3), dans lequel est fixée, à l'opposé de la section d'extrémité (14) du guide d'ondes (15), une cavité arrière (18) par une extrémité ouverte (21) de la cavité arrière (18) à l'ensemble de couches de substrat (3), dans lequel la cavité arrière (183) est configurée pour empêcher une partie de l'émission de signal de fréquence radio qui peut être émise depuis le motif d'émission (13) de fuir à l'extérieur de la section d'extrémité (14) du guide d'ondes (15),
**caractérisé en ce que** le dispositif de fréquence radio (1) comprend plusieurs unités de transition (2) disposées de manière adjacente les unes aux autres le long de la première surface extérieure (16) et de la deuxième surface extérieure (19) de l'ensemble de couches de substrat (3), et que les plusieurs unités de transition (2) sont disposées en deux ou plusieurs rangées (24, 25) s'étendant de manière parallèle et à une distance les unes vers les autres.

2. Dispositif de fréquence radio (1) selon la revendication 1, dans lequel une distance entre la ligne de transmission à paire différentielle planaire (7) et un côté arrière (20) de la cavité arrière (18), qui fait face à la première ou à la deuxième surface (10, 11) de l'ensemble de couches de substrat (3) est plus grande qu'au moins une distance entre des parties opposées (22, 23) de la ligne circonférentielle d'une section transversale de l'extrémité ouverte (21) de la cavité arrière (18) .

3. Dispositif de fréquence radio (1) selon l'une quelconque des revendications précédentes, **caractérisé en ce qu'**une zone de section transversale de l'extrémité ouverte (21) de la cavité arrière (18) et une zone de section transversale de l'extrémité ouverte (17) de la section d'extrémité (14) du guide d'ondes (15) sont identiques, et que l'extrémité ouverte (21) de la cavité arrière (18) superpose l'extrémité ouverte (17) de la section d'extrémité (14) du guide d'ondes (15).

4. Dispositif de fréquence radio (1) selon l'une quelconque des revendications précédentes, dans lequel une distance (26) entre des unités de transition adjacentes (2) d'une première rangée (24) ou d'une deuxième rangée (25) est plus grande que ou est identique à l'extension latérale des unités de transition (2), et dans lequel au moins certaines des unités de transition (2) de la première rangée (24) sont disposées dans un espace (26) correspondant entre des unités de transition (2) adjacentes de la deuxième rangée (25).

5. Dispositif de fréquence radio (1) selon l'une quelconque des revendications précédentes, **caractérisé en ce que** la conception des deux ou plusieurs cavités arrière (18) qui sont disposées de manière adjacente l'une par rapport à l'autre est identique.

6. Dispositif de fréquence radio (1) avec une unité de transition (2) fournissant une transition depuis une ligne de transmission à paire différentielle planaire (7) à un guide d'ondes de fréquence radio creux (15, 27), le dispositif de fréquence radio (1) comprenant un ensemble de couches de substrat (3) avec une ligne de transmission à paire différentielle planaire (7) disposée sur une ou plusieurs surfaces (10, 11) d'au moins une couche de substrat (4, 5) de l'ensemble de couches de substrat (3), et avec l'unité de transition (2) comprenant une section d'extrémité (12) de la ligne de transmission à paire différentielle (7) qui est configurée en tant qu'un motif d'émission de signal de fréquence radio (13), l'unité de transition (2) comprenant en outre une section d'extrémité (14) du guide d'ondes (15) pour des ondes électromagnétiques de fréquence radio qui est fixée à l'ensemble de couches de substrat (3) et qui superpose le motif d'émission de signal de fréquence radio (13), dans lequel la section d'extrémité (14) du guide d'ondes (15) est dirigée de manière perpendiculaire aux une ou plusieurs surfaces (10, 11) de l'ensemble de couches de substrat (3) avec la ligne de transmission à paire différentielle planaire (7), dans lequel une extrémité ouverte (17) de la section d'extrémité (14) du guide d'ondes (15) est fixée à une première surface extérieure (16) ou à une deuxième surface extérieure (19) de l'ensemble de couches de substrat (3), dans lequel la section d'extrémité (14) du guide d'ondes (15) est une première section d'extrémité (14) d'un premier guide d'ondes (15), et qu'à l'opposé de la section d'extrémité (14) du guide d'ondes (15), une deuxième section d'extrémité (28) d'un deuxième guide d'ondes (27) qui est dirigée dans une direction opposée de la première section d'extrémité (14) du premier guide d'ondes (15) est fixée à l'ensemble de couches de substrat (3), et dans lequel une partie de l'émission de signal de fréquence radio qui peut être émise depuis le motif d'émission (13) est transmise dans la deuxième section d'extrémité (28) du deuxième guide d'ondes (27), **caractérisé en ce que** le dispositif de fréquence radio (1) comprend plusieurs unités de transition (2) disposées de manière adjacente les unes aux autres le long de la première surface extérieure (16) et de la deuxième surface extérieure (19) de l'ensemble de couches de substrat (3),
et que les plusieurs unités de transition (2) sont disposées en deux ou plusieurs rangées (24, 25) s'étendant de manière parallèle et à une distance donnée les unes vers les autres.

7. Dispositif de fréquence radio (1) selon la revendication 6, **caractérisé en ce que** la zone de section transversale de la deuxième section d'extrémité (28) du deuxième guide d'ondes (27) et une zone de section transversale de l'extrémité ouverte (17) de la section d'extrémité (14) du guide d'ondes (15) sont identiques, et que la deuxième section d'extrémité (28) du deuxième guide d'ondes (27) superpose l'extrémité ouverte (17) de la section d'extrémité (14) du guide d'ondes (15) .

8. Dispositif de fréquence radio (1) selon la revendication 6 ou la revendication 7, dans lequel une distance (26) entre es unités de transition (2) adjacentes d'une première rangée (24) ou d'une deuxième rangée (25) est plus grande que ou est identique à l'extension latérale es unités de transition (2), et dans lequel au moins certaines des unités de transition (2) de la première rangée (24) sont disposées dans un espace (26) correspondant entre des unités de transition (2) adjacentes de la deuxième rangée (25).

9. Dispositif de fréquence radio (1) selon l'une quelconque des revendications précédentes 6 à 8, **caractérisé en ce que** la conception des deux ou plusieurs deuxièmes sections d'extrémité (28) des deuxièmes guides d'ondes (27) qui sont disposées de manière adjacente les unes aux autres est identique.
